# EUROPEAN PATENT APPLICATION

(11) **EP 4 738 975 A1**
(43) Date of publication of application: **06.05.2026**
(21) Application number: 23943042.4
(22) Date of filing: 30.06.2023
(51) Int. Cl.: H04W 76/10

(54) **INFORMATION TRANSMISSION METHOD AND APPARATUS, AND STORAGE MEDIUM**

(71) Applicant: Beijing Xiaomi Mobile Software Co., Ltd., Beijing 100085 (CN)
(72) Inventor: LIU, Xiaofei, Beijing 100085 (CN)
(74) Representative: Dehns Germany Partnerschaft mbB
(86) International application number: PCT/CN2023/105419
(87) International publication number: WO 2025/000551

(57) **Abstract**

Provided in the present disclosure are an information transmission method and apparatus, and a storage medium. The method comprises: sending to a second node indication information, which is used for the second node to acquire information of a terminal, wherein the information comprises information associated with a third node. In the present disclosure, when there is no network connection between a third node and a terminal, information of the terminal is forwarded to the third node, such that the reliability and availability of single-connection communication are improved, and in particular when the third node and a second node belong to different types of RATs, the reliability and availability of single-connection and cross-RAT communication are improved.

## Description

### TECHNICAL FIELD

The present disclosure relates to the field of communication and, specifically, to an information transmission method, an apparatus and a storage medium.

### BACKGROUND

Currently, the connection between a terminal and a network device may be either dual-connection or single-connection, where, in a dual-connection scenario, the terminal simultaneously accesses both the master node (MN) and the secondary node (SN) of the cell. In a single-connection scenario, the terminal accesses one node. Typically, for example, the terminal may access one base station at the same time and disconnect from other base stations.

### SUMMARY

To avoid the situation where a node fails to fetch information of a terminal due to the lack of a network connection with the terminal in a single-connection scenario, embodiments of the present disclosure provide an information transmission method, an apparatus, and a storage medium.

A first aspect of some embodiments of the present disclosure provides an information transmission method, which is applied to a first node, and includes:
sending indication information to a second node, where the indication information is used for fetching, by the second node, of information of a terminal, and the information includes information associated with a third node.

A second aspect of some embodiments of the present disclosure provides an information transmission method, which is applied to a second node, and includes:
receiving indication information, where the indication information is used for fetching, by the second node, of information of a terminal, and the information includes information associated with a third node.

A third aspect of some embodiments of the present disclosure provides an information transmission method, which is applied to a third node, and includes:
receiving information of a terminal sent by a second node, where the second node fetches the information based on indication information, and the information includes information associated with the third node.

A fourth aspect of some embodiments of the present disclosure provides a first node, which includes:
a transceiver module, configured to send indication information to a second node, where the indication information is used for fetching, by the second node, of information of a terminal, and the information includes information associated with a third node.

A fifth aspect of some embodiments of the present disclosure provides a second node, which includes:
a transceiver module, configured to receive indication information, where the indication information is used for fetching, by the second node, of information of a terminal, and the information includes information associated with a third node.

A sixth aspect of some embodiments of the present disclosure provides a third node, which includes:
receiving information of a terminal sent by a second node, where the information is fetched by the second node based on indication information, and the information includes information associated with a third node.

A seventh aspect of some embodiments of the present disclosure provides a first node, which includes:
one or more processors;
where the terminal is configured to perform the information transmission method according to any embodiment of the first aspect.

An eighth aspect of some embodiments of the present disclosure provides a second node, which includes:
one or more processors;
where a network device is configured to perform the information transmission method according to any embodiment of the second aspect.

A ninth aspect of some embodiments of the present disclosure provides a third node, which includes:
one or more processors;
where a network device is configured to perform the information transmission method according to any embodiment of the third aspect.

A tenth aspect of some embodiments of the present disclosure provides a communication system, which includes a first node, a second node, and a third node, where the first node is configured to implement the information transmission method according to any embodiment of the first aspect, the second node is configured to implement the information transmission method according to any embodiment of the second aspect, and the third node is configured to implement the information transmission method according to any embodiment of the third aspect.

An eleventh aspect of some embodiments of the present disclosure provides a storage medium, where the instruction, upon being executed on a communication device, causes the communication device to implement the information transmission method according to any embodiment of the first aspect, the second aspect, or the third aspect.

According to some embodiments of the present disclosure, in the absence of a network connection between the third node and the terminal, the information of the terminal is forwarded to the third node, thereby improving the reliability and availability of single-connection communication. In particular, when the third node and the second node belong to different types of radio access technology (RAT), the reliability and availability of single-connection and cross-RAT communication are improved.

It should be understood that the foregoing general description and the following detailed description are exemplary and explanatory only, and do not limit the present disclosure.

### BRIEF DESCRIPTION OF THE DRAWINGS

The accompanying drawings, which are incorporated in and constitute a part of this specification, illustrate embodiments consistent with the disclosure and together with the description serve to explain the principles of the present disclosure.
FIG. 1 is an exemplary schematic architectural diagram of a communication system according to an embodiment of the present disclosure.
FIG. 2A is an exemplary interaction diagram of an information transmission method according to an embodiment of the present disclosure.
FIG. 2B is a schematic diagram of a network architecture according to an embodiment of the present disclosure.
FIG. 3A is an exemplary interaction diagram of an information transmission method according to an embodiment of the present disclosure.
FIG. 3B is an exemplary interaction diagram of an information transmission method according to an embodiment of the present disclosure.
FIG. 4 is an exemplary interaction diagram of an information transmission method according to an embodiment of the present disclosure.
FIG. 5 is an exemplary interaction diagram of an information transmission method according to an embodiment of the present disclosure.
FIG. 6A is an exemplary interaction diagram of an information transmission method according to an embodiment of the present disclosure.
FIG. 6B is an exemplary interaction diagram of an information transmission method according to an embodiment of the present disclosure.
FIG. 6C is an exemplary interaction diagram of an information transmission method according to an embodiment of the present disclosure.
FIG. 7A is an exemplary interaction diagram of an information transmission apparatus according to an embodiment of the present disclosure.
FIG. 7B is an exemplary interaction diagram of an information transmission apparatus according to an embodiment of the present disclosure.
FIG. 7C is an exemplary interaction diagram of an information transmission apparatus according to an embodiment of the present disclosure.
FIG. 8A is an exemplary interaction diagram of a communication device according to an embodiment of the present disclosure.
FIG. 8B is an exemplary interaction diagram of a chip according to an embodiment of the present disclosure.

### DETAILED DESCRIPTION

Exemplary embodiments will be described in detail herein, examples of which are illustrated in the accompanying drawings. The following description refers to the accompanying drawings, where, unless otherwise indicated, the same reference numerals in different drawings denote the same or similar elements. The implementations described in the following exemplary embodiments do not represent all implementations consistent with the present invention. Rather, they are merely examples of apparatuses and methods consistent with certain aspects of the present disclosure, as detailed in the appended claims.

The terms used in the present disclosure are for the purpose of describing particular embodiments only and are not intended to limit the present disclosure. As used in the present disclosure and the appended claims, the singular forms "a/an", "said", and "the" are intended to include the plural forms as well, unless the context clearly indicates otherwise. It should also be understood that the term "and/or" as used herein refers to and includes any and all possible combinations of at least one of the associated listed items.

It should be understood that although terms such as first, second, third may be used in the present disclosure to describe various messages, these messages should not be limited by these terms. These terms are only used to distinguish messages of the same type from one another. For example, a first message may also be referred to as a second message without departing from the scope of the present disclosure, and similarly, a second message may also be referred to as a first message. Depending on the context, the word "if" as used herein may be interpreted as "when", "upon", or "in response to determining".

Some embodiments of the present disclosure provide an information transmission method, an apparatus, and a storage medium.

In a first aspect, some embodiments of the present disclosure provide an information transmission method, which is applied to a first node, and includes:
sending indication information to a second node, where the indication information is used for fetching, by the second node, of information of a terminal, and the information includes information associated with a third node.

In the foregoing embodiments, the first node may send indication information to the second node, so that the information of the terminal may be fetched by the second node based on the indication information, thereby improving the reliability and availability of single-connection communication.

Based on some embodiments of the first aspect, in some embodiments, the indication information includes at least one of the followings:
identity information of the terminal;
availability indication information, where the availability indication information indicates that the information is available at the terminal;
identity information of the third node.

In the foregoing embodiments, the second node may be informed by the first node, through the foregoing information, that the information is available at the terminal, thereby enabling the second node to determine whether to fetch the information with simple implementation and high availability.

Based on some embodiments of the first aspect, in some embodiments, the first node is selected from at least one of the followings:
the terminal;
a first network device.

In the foregoing embodiments, the first node may be the terminal itself or a first network device. The first network device may be a network device that the terminal previously accessed when it has the information; or the first network device may be a network management device, including but not limited to operation administration and maintenance (OAM), so that the information of the terminal can be fetched by the second node from the first node, thereby achieving high availability.

Based on some embodiments of the first aspect, in some embodiments, when the first node is the first network device, the second node is selected from one or more second network devices having an inter-network interface with the first network device.

In the foregoing embodiments, when the first node sending the indication information is the first network device, the second node can be selected from one or more second network devices having an inter-network interface with the first network device. Therefore, the second network device may fetch the information of the terminal through the inter-network interface, thereby improving the reliability and availability of single-connection communication.

Based on some embodiments of the first aspect, in some embodiments, the information includes at least one of the followings:
a self-organizing network (SON) report;
a minimization drive test (MDT) report.

In the foregoing embodiments, the information of the terminal may include the aforementioned report, so as to assist network devices in network optimization and the like, thereby achieving high availability.

Based on some embodiments of the first aspect, in some embodiments, the information includes a random-access report.

In the foregoing embodiments, the information of the terminal may include the random-access report, so as to assist network devices in mobility management, thereby achieving high availability.

Based on some embodiments of the first aspect, in some embodiments, when the first node is the first network device, the third node and the first node are either a same network device or different network devices.

For example, when the information is a random-access report, which may be used by the first node for network optimization. The third node may be the same network device as the first node. When the information is a MDT report, the MDT report is to be fetched by the second node based on the indication information of the first node (e.g., base station, core network, or OAM) and sent to the third node (e.g., trace collection entity (TCE)), where the third node and the first node are different network devices.

In the above-mentioned embodiments, when the first node is the first network device that the terminal accessed when it had the specific information (e.g., stored information), the third node and the first node sending the indication information may be the same network device or different network devices, thereby improving the reliability and availability of single-connection communication.

Based on some embodiments of the first aspect, in some embodiments, at least two of the first node, the second node, and the third node belong to different types of radio access technology (RAT).

In the above-mentioned embodiments, the reliability and availability of single-connection and cross-RAT communication are improved.

Based on some embodiments of the first aspect, in some embodiments, at least two of the first node, the second node, and the third node may belong to the same type of RAT, which is not limited in the present disclosure.

A second aspect of some embodiments of the present disclosure provides an information transmission method, which is applied to a second node, and includes:
receiving indication information, where the indication information is used for fetching, by the second node, of information of a terminal, and the information includes information associated with a third node.

Based on some embodiments of the second aspect, in some embodiments, the indication information includes at least one of the followings:
identity information of the terminal;
availability indication information, where the availability indication information indicates that the information is available at the terminal;
identity information of the third node.

Based on some embodiments of the second aspect, in some embodiments, the method further includes:
fetching, based on the indication information, the information from a first node.

In the foregoing embodiments, the second node may, based on the indication information, autonomously determine whether to fetch the information from the first node, thereby improving the reliability and availability of single-connection communication.

Based on some embodiments of the second aspect, in some embodiments, the first node is selected from at least one of the followings:
the terminal;
the first network device.

Based on some embodiments of the second aspect, in some embodiments, when the first node is the first network device, the second node is selected from one or more second network devices having an inter-network interface with the first network device.

Based on some embodiments of the second aspect, in some embodiments, the method further includes:
sending the information to the third node.

In the foregoing embodiments, the second node can send the fetched information to the third node. In the absence of a network connection between the third node and the terminal, the information of the terminal is forwarded to the third node, thereby improving the reliability and availability of single-connection communication.

Based on some embodiments of the second aspect, in some embodiments, the information includes at least one of the followings:
the self-organizing network (SON) report;
the minimization drive test (MDT) report.

Based on some embodiments of the second aspect, in some embodiments, the information includes the random-access report.

Based on some embodiments of the second aspect, in some embodiments, when the first node is the first network device, the third node and the first node are either a same network device or different network devices.

Based on some embodiments of the second aspect, in some embodiments, at least two of the first node, the second node, and the third node belong to different types of radio access technology (RAT).

A third aspect of some embodiments of the present disclosure provides an information transmission method, which is applied to a third node, and includes:
receiving information of a terminal sent by a second node, where the second node fetches the information based on indication information, and the information includes information associated with the third node.

In the foregoing embodiments, the third node may fetch information of the terminal in the case that it is not connected to the terminal, thereby improving the reliability and availability of single-connection communication.

Based on some embodiments of the third aspect, in some embodiments, the indication information includes at least one of the followings:
identity information of the terminal;
availability indication information, where the availability indication information indicates that the information is available at the terminal;
identity information of the third node.

Based on some embodiments of the third aspect, in some embodiments, the method further includes:
sending the indication information to the second node.

Based on some embodiments of the third aspect, in some embodiments, the information includes at least one of the followings:
the self-organizing network SON report;
the minimization drive test MDT report.

Based on some embodiments of the third aspect, in some embodiments, the information includes the random-access report.

Based on some embodiments of the third aspect, in some embodiments, the second node and the third node belong to different types of radio access technology (RAT).

A fourth aspect of some embodiments of the present disclosure provides a first node including:
a transceiver module, configured to send indication information to a second node, where the indication information is used for fetching, by the second node, of information of a terminal, and the information includes information associated with a third node.

A fifth aspect of some embodiments of the present disclosure provides a second node, including:
a transceiver module, configured to receive indication information, where the indication information is used for fetching, by the second node, of information of a terminal, and the information includes information associated with a third node.

A fifth aspect of some embodiments of the present disclosure provides a third node, including:
receiving information of a terminal sent by a second node, where the information is fetched by the second node based on indication information, and the information includes information associated with a third node.

A seventh aspect of some embodiments of the present disclosure provides a first node, including:
one or more processors;
where the terminal is configured to perform the information transmission method according to any embodiment of the first aspect.

An eighth aspect of some embodiments of the present disclosure provides a second node, including:
one or more processors;
where a network device is configured to perform the information transmission method according to any embodiment of the second aspect.

A ninth aspect of some embodiments of the present disclosure provides a third node, including:
one or more processors;
where a network device is configured to perform the information transmission method according to any embodiment of the third aspect.

A tenth aspect of some embodiments of the present disclosure provides a communication system, including a first node, a second node, and a third node, where the first node is configured to implement the information transmission method according to any embodiment of the first aspect, the second node is configured to implement the information transmission method according to any embodiment of the second aspect, and the third node is configured to implement the information transmission method according to any embodiment of the third aspect.

An eleventh aspect of some embodiments of the present disclosure provides a storage medium, where the instruction, upon being executed on a communication device, causes the communication device to implement the information transmission method according to any embodiment of the first aspect, the second aspect, or the third aspect.

It can be understood that the aforementioned terminals, network devices, communication systems, storage medium, and computer programs are all configured to execute the methods proposed in the embodiments of the present disclosure. Therefore, for the beneficial effects that can be achieved by them, the beneficial effects in the corresponding methods may be referred to, which are not repeated here.

Some embodiments of the present disclosure provide an information transmission method, an apparatus, and a storage medium. In some embodiments, the terms "information transmission method", "information processing method", "communication method" and the like may be used interchangeably. The terms "information transmission apparatus", "information processing apparatus", "communication apparatus" and the like may be used interchangeably. The terms "information processing system", "communication system" and the like can be used interchangeably.

Such embodiments of the present disclosure are not exhaustive, but merely illustrative of some embodiments, which are not intended to limit the protection scope of the present disclosure. Unless conflict occurred, each step in a particular embodiment can be implemented as an independent embodiment, and the steps can be freely combined. For example, a solution after removing some steps in a particular embodiment may also be implemented as an independent embodiment, and the order of the steps in a particular embodiment may be freely interchanged. Furthermore, the optional implementation manners in a particular embodiment can be freely combined. Moreover, the embodiments may be freely combined with each other, for example, portions or the entirety of steps of different embodiments may be freely combined, and a particular embodiment may be freely combined with the optional implementation manners of other embodiments.

In each of the embodiments of the present disclosure, unless otherwise specified or logical conflict occurred, the terms and/or descriptions of the embodiments are consistent and may be referenced by each other. Technical features in different embodiments may be combined to form new embodiments based on their inherent logical relationships.

The terms used in the embodiments of the present disclosure are for the purpose of describing particular embodiments only, which is not intended to limit the scope of the present disclosure.

In the embodiments of the present disclosure, unless otherwise stated, elements expressed in the singular form, such as "a", "an", "the", "above-mentioned", "said", "foregoing", "this" may mean "one and only one", or "one or more", "at least one" and the like. For example, when articles, such as "a", "an", "the", are used in translation, the noun following the article may be understood as either a singular or a plural expression.

In the embodiments of the present disclosure, "multiple/a plurality of" refers to two or more.

In some embodiments, the terms "at least one of", "one or more", "a plurality of", and "multiple" may be used interchangeably.

In some embodiments, the expressions "at least one of A and B", "A and/or B", "A in one case and B in another", "in response to one case A, in response to another case B", and the like, may include the following technical solutions according to the situation: in some embodiments, A (A is executed regardless of B); in some embodiments, B (B is executed regardless of A); in some embodiments, execution is selected from A and B (A and B are selectively executed); in some embodiments, A and B (both A and B are executed). The same applies when there are more branches such as A, B, C.

In some embodiments, the expressions "A or B" may include the following technical solutions according to the situation: in some embodiments, A (A is executed regardless of B); in some embodiments, B (B is executed regardless of A); in some embodiments, execution is selected from A and B (A and B are selectively executed). The same applies when more elements such as A, B, C exist.

The prefixes such as "first" and "second" in some embodiments of the present disclosure are merely used for distinguishing different descriptive objects and do not impose restrictions on the position, order, priority, quantity, or content of the descriptive objects. The description of the descriptive objects is found in the claims or the context of the embodiments, and the use of prefixes should not constitute unnecessary restrictions. For example, if the descriptive object is a "field", the ordinal numbers preceding "field" in "first field" and "second field" do not restrict the position or order of the "fields". "First" and "second" do not restrict whether the "fields" they modify are in the same message, nor do they restrict the order of "first field" and "second field". For instance, if the descriptive object is a "level", the ordinal numbers preceding "level" in "first level" and "second level" do not restrict the priority between "levels". For example, the number of descriptive objects is not limited by ordinal numbers and may be one or more. For example, in "first apparatus", the number of "apparatus" may be one or more. Furthermore, the objects modified by different prefixes may be the same or different. For example, if the object is described as "apparatus", then "first apparatus" and "second apparatus" may be the same apparatus or different apparatuses, and their types may be the same or different. For example, if the object is described as "information", then "first information" and "second information" may be the same information or different information, and their content may be the same or different.

In some embodiments, "including A", "containing A", "indicating A", and "carrying A" may be interpreted as directly carrying A or indirectly indicating A.

In some embodiments, the terms "in response to...", "in response to determining...", "in the case of...", "when...", "upon...", "if..." and the like may be used interchangeably.

In some embodiments, the apparatus and device may be interpreted as physical or virtual, and their names are not limited to the names recorded in the embodiments. In some cases, they may also be understood as "equipment", "device", "circuit", "network element", "node", "function", "unit", "section", "system", "network", "entity", "body" and the like.

In some embodiments, "network" may be interpreted as apparatus included in the network, such as access network devices, and core network devices.

In some embodiments, "access network device (AN device)" may also be referred to as "radio access network device (RAN device)", "base station (BS)", "radio base station", or "fixed station". In some embodiments, AN device may also be understood as "node", "access point", "transmission point (TP)", "reception point (RP), " "transmission and/or reception point (TRP)", "panel", "antenna panel", "antenna array", "cell", "macro cell", "small cell", "femto cell", "pico cell", "sector", "cell group", "serving cell", "carrier", "component carrier", "bandwidth part (BWP)" and the like.

In some embodiments, "terminal" or "terminal device" may be referred to as "user equipment (UE)", "user terminal", "mobile station (MS)", "mobile terminal (MT)", "subscriber station", "mobile unit", "subscriber unit", "wireless unit", "remote unit", "mobile device", "wireless device", "wireless communication device", "remote device", "mobile subscriber station", "access terminal", "mobile terminal", "wireless terminal", "remote terminal", "handset", "user agent", "mobile client", "client", and the like.

In some embodiments, the fetching of data, information, and the like may comply with the laws and regulations of the country where the location is situated.

In some embodiments, data, information, and the like may be fetched with the user's consent.

Furthermore, each element, each row, or each column in the table of some embodiments of the present disclosure may be implemented as an independent embodiment, and any combination of any element, any row, or any column may also be implemented as an independent embodiment.

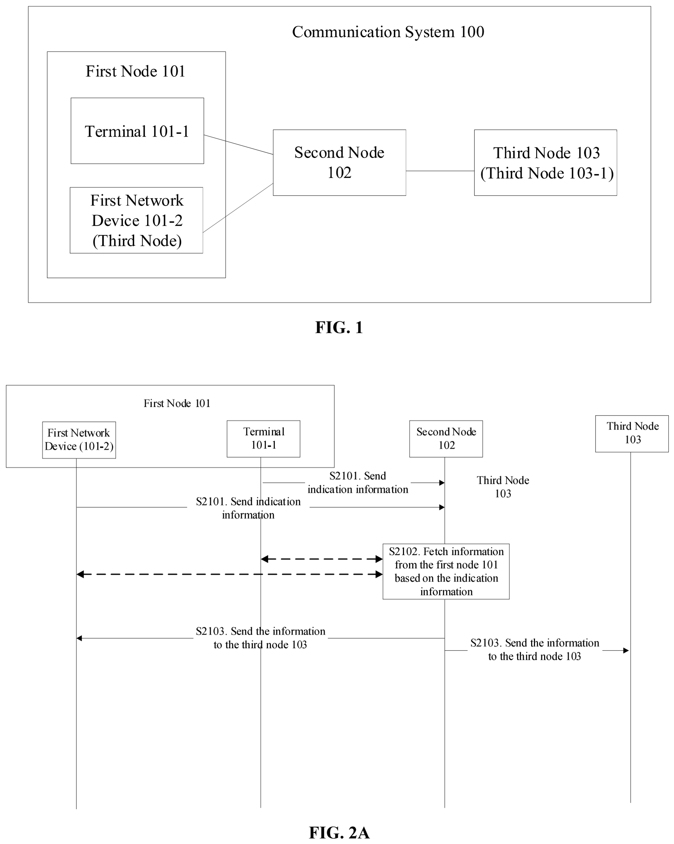

FIG. 1 is a schematic architectural diagram of a communication system according to an embodiment of the present disclosure.

As shown in FIG. 1, the communication system 100 includes a first node 101, a second node 102, and a third node 103.

In some embodiments, the first node 101 may be a terminal 101-1.

In some embodiments, terminal 101-1 includes, for example, at least one of the following: mobile phone, wearable device, internet of things device, car with communication function, smart car, pad, computer with wireless transceiver function, virtual reality (VR) terminal device, augmented reality (AR) terminal device, wireless terminal device in industrial control, wireless terminal device in self-driving, wireless terminal device in remote medical surgery, wireless terminal device in smart grid, wireless terminal device in transportation safety, wireless terminal device in smart city, and wireless terminal device in smart home, which is not limited here.

In some embodiments, the first node 101 may be a network device.

In some embodiments, the network device includes an access network device, such as a node or device that connects a terminal to a wireless network. The access network device may include at least one of the following in a 5G communication system: an evolved node B (eNB), a next generation eNB (ng-eNB), a next generation node B (gNB), a node B (NB), a home node B (HNB), a home evolved node B (HeNB), a radio backhaul device, a radio network controller (RNC), a base station controller (BSC), a base transceiver station (BTS), a base band unit (BBU), a mobile switching center, a base station in a 6G communication system, an open RAN, a cloud RAN, a base station in other communication systems, and an access node in a wi-fi system, which is not limited here.

In some embodiments, the technical solutions of the present disclosure may be applied to the Open RAN architecture. The interfaces between or within access network devices involved in the embodiments of the present disclosure may be understood as internal interfaces of Open RAN. The processes and information interactions between these internal interfaces may be implemented by software or programs.

In some embodiments, the access network device may be composed of a central unit (CU) and a distributed unit (DU), where the CU may also be called a control unit. The CU-DU structure may separate the protocol layer of the access network device, with some of the protocol layer functions being centrally controlled by the CU, while the remaining part or all of the protocol layer functions being distributed in the DUs that are centrally controlled by the CU, which is not limited here.

In some embodiments, the network device includes a core network device, which may be a single device, multiple devices, or a group of devices. For example, the core network includes at least one of the evolved packet core (EPC), 5G core network (5GCN), and next generation core (NGC).

In some embodiments, the first node 101 may be a network device. When the terminal has information (e.g., stored information), the terminal accesses the first node. In the embodiments, the first node may be the first network device 101-2.

For example, the information in the present disclosure may be information stored in the terminal.

For example, the information in the present disclosure may be information associated with network device(s) and stored in the terminal.

For example, the information in the present disclosure may be information generated or fetched by a terminal that has previously accessed or attempted to access a network device.

For example, the information in the present disclosure may be information fetched by the terminal after performing operations such as measurement based on instructions issued by the network device.

For example, the information in the present disclosure includes, but is not limited to, one or more of the SON report, MDT report, and random-access report.

For example, the first network device 101-2 may be a network device that the terminal 101-1 accessed when it has the information. For example, the first network device 101-2 may be a historical serving base station of the terminal.

For example, since terminal 101-1 accessed the first network device 101-2 when it has the information, the first network device 101-2 may fetch the information of the terminal when being accessed by the terminal 101-1.

For example, the first network device 101-2 may be a network management device, including but not limited to OAM, so that the second node 102 may fetch information of the terminal from the first node 101.

For example, the first network device 101-2, as a network management device, may fetch information of the terminal 101-1 through devices such as the access network device and the core network device.

In some embodiments, the second node 102 may be a network device.

For example, when the first node 101 is terminal 101-1, the second node 102 may be the serving base station of terminal 101-1.

For example, when the first node 101 is the first network device 101-2, the second node 102 may be the second network device 102-1 that has an inter-network interface with the first network device. The second node 102 may also be the serving base station of the terminal 101-1.

It should be understood that after the second node fetches the information stored in the terminal, it may forward the information to the third node.

In some embodiments, the third node 103 may be a network device.

For example, the third node 103 may be the same network device as the first network device 101-2. In other words, the second node may send the information of the terminal to the first node.

For example, the third node 103 may be a different network device from the first network device 101-2, such as network device 103-1. In other words, the second node 102 may send information of the terminal 101-1 to the third node 103-1, which is different from the first node 101.

In some embodiments, at least two of the first node 101, the second node 102, and the third node 103 belong to different types of RAT.

In some embodiments, the RAT type includes, but is not limited to, at least one of the following: long term evolution (LTE), new radio (NR), non-3rd generation partnership project (Non-3GPP).

Non-3GPP includes, but is not limited to, wireless local area network (WLAN) and the like.

For example, the first and second nodes are NR nodes, while the third node is an LTE node.

For example, the first node is an LTE node; the second node 102 is a NR node; and the third node is a Non-3GPP node.

In some embodiments, at least two of the first node 101, the second node 102, and the third node 103 belong to the same type of RAT, which is not limited in the present disclosure.

For example, the first node 101, the second node 102, and the third node 103 are NR nodes.

For example, the first node 101, the second node 102, and the third node 103 are LTE nodes.

For example, the first node 101 is a NR node, the second node 102 and the third node 103 are LTE nodes.

It can be understood that the communication systems described in some embodiments of the present disclosure are for the purpose of more clearly illustrating the technical solutions of the embodiments of the present disclosure, which do not constitute limitations on the technical solutions proposed in some embodiments of the present disclosure. As those skilled in the art may know, with the evolution of system architecture and the emergence of new service scenarios, the technical solutions proposed in some embodiments of the present disclosure are also applicable to similar technical problems.

The following embodiments of the present disclosure may be applied to the communication system 100 or a part of its entities as shown in FIG. 1, but are not limited thereto. The entities illustrated in FIG. 1 are exemplary. The communication system may include all or part of the entities in FIG. 1, or may include other entities beyond those in FIG. 1. The number and form of the entities may be arbitrary. Each entity may be physical or virtual. The connection relationships between the entities are illustrative; the entities may or may not be connected, and the connection may be in any way, including direct or indirect connection, wired or wireless connection.

Each embodiment of the present disclosure may be applied to long term evolution (LTE), LTE-advanced (LTE-A), LTE-beyond (LTE-B), SUPER 3G, IMT-advanced, 4th generation mobile communication system (4G), 5th generation mobile communication system (5G), 5G new radio (NR), future radio access (FRA), new-radio access technology (RAT), new radio (NR), new radio access (NX), future generation radio access (FX), global system for mobile communications (GSM (registered trademark)), CDMA2000, ultra mobile broadband (UMB), IEEE 802.11 (Wi-Fi (registered trademark)), IEEE 802.16 (WiMAX (registered trademark)), IEEE 802.20, and ultra-wideband band (UWB), bluebooth (registered trademark), public land mobile network (PLMN) networks, systems utilizing other communication methods, and/or next-generation systems built upon them. Furthermore, each embodiment of the present disclosure may be applied to a combination of multiple systems (e.g., a combination of LTE or LTE-A with 5G and the like).

Before the information transmission method, provided in the present disclosure, is introduced, it should be noted that FIG. 2A of the embodiments of the present disclosure involves a first node 101, a second node 102, and a third node 103.

The first node 101 is the node that sends the indication information.

For example, the first node 101 may be the terminal 101-1.

In some embodiments, when terminal 101-1 stores specific information, the terminal may send indication information.

For example, the first node 101 may be a first network device 101-2.

The first network device 101-2 may be a network device that the terminal 101-1 accessed when terminal 101-1 had specific information (e.g. stored information), including but not limited to the historical serving base station of the terminal 101-1. For example, since the historical serving base station of the terminal 101-1 has provided services to the terminal 101-1, the first network device determines that the terminal has the information, so that the first network device may send the indication information to indicate that the terminal has the information.

The indication information is used for fetching, by the second node 102, of information of the terminal 101-1.

The information in the present disclosure may be information stored in the terminal.

For example, the first node 101 may be a network associated device, including but not limited to OAM.

The second node 102 is a node that fetches information from the terminal.

For example, the first node 101 is terminal 101-1, and the second node 102 may be the serving base station of terminal 101-1. Thus, information of terminal 101-1 may be fetched through the network connection with terminal 101-1.

For example, the information in the present disclosure may be information associated with network devices and stored in the terminal.

For example, the information in the present disclosure may be information generated or fetched by a terminal that has previously accessed or attempted to access a network device.

For example, the information in the present disclosure may be information fetched by the terminal after performing operations such as measurement based on instructions issued by the network device.

For example, the information in the present disclosure includes, but is not limited to, one or more of the SON report, MDT report, and random-access report.

For example, the first node 101 is a first network device 101-2, and the second node 102 may be a second network device that has an inter-network interface with the first network device 101-2.

The inter-network interface includes, but is not limited to, the X2 or Xn interface.

The third node 103 is a node that ultimately fetches the information of the terminal.

For example, the third node 103 may be the same network device as the first network device 101-2. For instance, when the information is a random-access report, the third node 103 and the first network device 101-2 are the same network device.

For example, the third node 103 may be a different network device from the first network device 101-2.

For example, when the information is an MDT report, the third node 103 and the first network device 101-2 are different network devices. The MDT report is to be fetched by the second node 102 based on the indication information of the first node 101 (e.g., base station, core network, or OAM) and sent to the third node 103 (e.g., TCE).

At least two of the first node 101, the second node 102, and the third node 103 may belong to different types of RAT.

At least two of the first node 101, the second node 102, and the third node 103 may belong to the same type of RAT.

FIG. 2A is an exemplary interaction diagram of an information transmission method according to an embodiment of the present disclosure. As shown in FIG. 2A, some embodiments of the present disclosure relate to an information transmission method, which includes the following.

In step S2101, the first node 101 sends indication information to the second node 102.

In some embodiments, the second node 102 receives the indication information.

In some embodiments, the name of the indication information is not limited. For example, the name of the indication information may be indication message, a first message, a first signaling or the like.

In some embodiments, the indication information is used for fetching, by the second node, of information of a terminal. For example, the information of the terminal is the stored information of the terminal. For example, when the second node receives the indication information, the second node fetches the information of the terminal.

In some embodiments, the second node 102 sends a request message to the terminal to request the information. In other embodiments, the terminal may periodically send its own stored messages to the second node 102. The present disclosure does not limit the specific manner for fetching the stored messages of the terminal.

In some embodiments, the information includes information associated with a third node. For example, the third node is a historical serving base station previously serving the terminal that sends the indication information to the second node, or a historical serving base station previously serving other terminals. For example, the third node may be a TCE and the like.

It should be understood that the information may also include other information, such as the identity of the terminal and the like, which is not limited in the present disclosure.

For example, the information in the present disclosure may be information stored in the terminal.

For example, the information in the present disclosure may be information associated with network devices and stored in the terminal.

For example, the information in the present disclosure may be information generated or fetched by a terminal that has previously accessed or attempted to access a network device.

For example, the information in the present disclosure may be information fetched by the terminal after performing operations such as measurement based on instructions issued by the network device.

For example, the information in the present disclosure includes, but is not limited to, one or more of the SON report, MDT report, and random-access report.

In some embodiments, the indication information may include identity information of the terminal.

Accordingly, the first node 101 sends identity information of the terminal to the second node 102, thereby indicating that the information is available at the terminal. The information is associated with the third node 103.

In some embodiments, the indication information may include availability indication information.

Accordingly, the first node 101 sends availability indication information to the second node 102, thereby indicating that the information is available at the terminal, where the information is associated with the third node 103. Thus, after receiving the availability indication information, the second node may interact with the terminal to fetch the information.

In one example, availability indication information already agreed upon in the protocol may be reused as the availability indication information.

For example, random-access report availability indication information or other availability indication information may be reused as the availability indication information, which is not limited in the present disclosure.

In one example, the availability indication information may be dedicated availability indication information.

For example, the availability indication information is used for indicating that the information is available at the terminal, and does not indicate anything else.

In one example, when the bit value of the availability indication information is set to "1", the availability indication information indicates that the information is available at the terminal; when the bit value of the availability indication information is set to "0", the availability indication information indicates that the information is not available at the terminal.

Alternatively, when the bit value of the availability indication information is set to "0", the availability indication information indicates that the information is available at the terminal; when the bit value of the availability indication information is set to "1", the availability indication information indicates that the information is not available at the terminal.

In some embodiments, the indication information includes identity information of the third node.

Accordingly, the first node 101 sends the identity information of the third node to the second node 102, indicating that the information associated with the third node is available at the terminal. Thus, after fetching the information, the second node may forward the information to the third node based on the identity information of the third node.

For example, the identity information of the third node includes, but is not limited to, one or more node identities or cell identities.

In some embodiments, the indication information includes one or more of identity information of the terminal, availability indication information, and identity information of the third node.

In some embodiments, the indication information may be indicated by the same first node 101. For example, the indication information includes identity information of the terminal and availability indication information. The availability indication information and identity information of the terminal are sent to the second node 102 by a network device that the terminal accessed when the terminal has information associated with the third node 103. The network device includes but not limited to the historical serving base station of the terminal.

In some embodiments, the indication information may be indicated by different first nodes 101. For example, the indication information includes identity information of the terminal and availability indication information. The identity information of the terminal is sent to the second node 102 by a network device that the terminal accessed when it has information associated with the third node 103. The network device includes but not limited to the historical serving base station of the terminal. The availability indication information is sent by the terminal to the second node.

In one example, the terminal 101-1 sends identity information of the terminal to the second node 102.

In one example, the terminal 101-1 sends availability indication information to the second node 102.

In one example, the terminal 101-1 sends identity information of the third node to the second node 102.

In one example, the terminal 101-1 sends identity information of the terminal and availability indication information to the second node 102.

In one example, the terminal 101-1 sends identity information of the terminal and identity information of the third node to the second node 102.

In one example, the terminal 101-1 sends identity information of the terminal, availability indication information, and identity information of the third node to the second node 102.

In one example, the first network device 101-2 sends identity information of the terminal to the second node 102.

In one example, the first network device 101-2 sends availability indication information to the second node 102.

In one example, the first network device 101-2 sends identity information of the third node to the second node 102. In one example, the first network device 101-2 sends identity information of the terminal and availability indication information to the second node 102.

In one example, the first network device 101-2 sends identity information of the terminal and identity information of the third node to the second node 102.

In one example, the first network device 101-2 sends identity information of the terminal, availability indication information, and identity information of the third node to the second node 102.

In one example, the terminal 101-1 sends identity information of the terminal to the second node 102, and the first network device 101-2 sends availability indication information to the second node 102.

In one example, the terminal 101-1 sends identity information of the terminal to the second node 102, and the first network device 101-2 sends availability indication information and identity of the third node to the second node 102.

In one example, the terminal 101-1 sends availability indication information to the second node 102, and the first network device 101-2 sends identity information of the terminal to the second node 102.

In one example, the terminal 101-1 sends availability indication information to the second node 102, and the first network device 101-2 sends identity information of the terminal and identity of the third node to the second node 102.

In one example, terminal 101-1 sends the identity of the third node to the second node 102. The first network device 101-2 sends the identity information of the terminal and availability indication information to the second node 102.

In one example, the terminal 101-1 sends identity information of the terminal and availability indication information to the second node 102. The first network device 101-2 sends identity of the third node to the second node 102.

In one example, the terminal 101-1 sends identity information of the terminal and the identity of the third node to the second node 102. The first network device 101-2 sends availability indication information to the second node 102.

The foregoing is merely illustrative. One or more items of the aforementioned indication information may be sent from the terminal 101-1 to the second node 102, or from the first network device 101-2 to the second node 102.

Optionally, one or more items of the aforementioned indication information may be sent by terminal 101-1 to the second node 102, while the remaining indication information may be sent by the first network device 101-2 to the second node 102.

The second network device may respectively fetch, from the first network device or terminal, availability indication information, terminal identity, and the identity of the target recipient (third node) corresponding to the stored information of the terminal.

In some embodiments, the indication information may include other information content that may be used by the second node to fetch information of the terminal, which is not limited in the present disclosure.

In some embodiments, the first node 101 is the terminal 101-1. Correspondingly, the second node 102 is a network device that has a network connection with the terminal. The third node 103 may be the same network device as the first network device 101-2, or the third node 103 may be a different network device from the first network device 101-2.

For example, the second node 102 is the serving base station of the terminal 101-1.

For example, the second node 102 is a network device that has an inter-network interface with the first network device 101-2.

For example, the second node 102 is a serving base station of the terminal and a network device that has an inter-network interface with the first network device 101-2.

Accordingly, the terminal 101-1 may send indication information to the second node 102 through the network connection with the second node 102, so that the second node 102, such as the serving base station of the current terminal, fetches the information of the terminal and forward the information of the terminal to the third node 103, which includes, but is not limited to, the historical serving base station of the terminal, TCE and the like.

Accordingly, the first network device 101-2 may send indication information to the second node 102 through the inter-network interface between the first network device 101-2 and the second node 102, so that the second node 102, such as the current serving base station of the terminal, fetches the information of the terminal and forward the information of the terminal to the third node 103. The third node 103 includes, but is not limited to, the historical serving base station of the terminal, TCE and the like.

In some embodiments, the first node 101 includes one or more first network devices that the terminal accesses when the terminal has the aforementioned information. Correspondingly, the second node 102 is a second network device that has an inter-network interface with the first network device. The third node 103 may be the same network device as the first network device 101-2, or the third node 103 may be a different network device from the first network device 101-2. For example, the third node 103 may be a historical serving base station of the terminal, a TCE, and the like.

For example, the first node 101 is the historical serving base station of the terminal.

For example, the second node 102 is the serving base station of the terminal.

For example, a direct inter-network interface exists between the first node 101 and the second node 102.

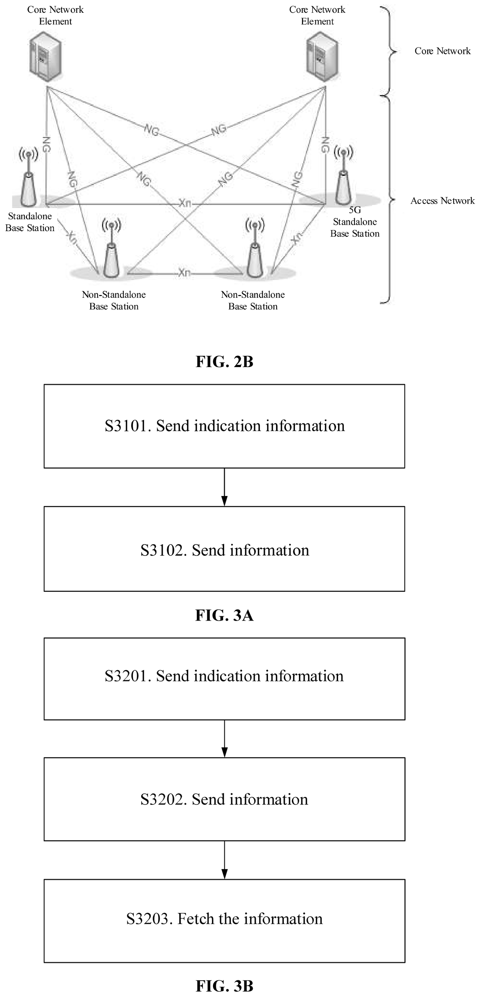

For example, in the absence of the direct network interface between the first node 101 and the second node 102, the first node 101 and the second node 102 may be connected through other network devices. For example, the network interface mentioned above includes, but is not limited to, the X2 or Xn interface, as shown in FIG. 2B.

For example, the third node 103 is the historical serving base station of the terminal.

For example, the third node 103 is another network device, such as TCE.

For example, the information in the present disclosure may be information stored in the terminal.

For example, the information in the present disclosure may be information associated with the network device and stored in the terminal.

For example, the information in the present disclosure may be information generated or fetched by a terminal that has previously accessed or attempted to access a network device.

For example, the information in the present disclosure may be information fetched by the terminal after performing operations such as measurement based on instructions issued by the network device.

In some embodiments, the information includes SON report.

In some embodiments, the information includes MDT report.

In some embodiments, the information includes SON report and MDT report.

In some embodiments, the information may include random-access report.

In some embodiments, the information includes SON report and random-access report.

In some embodiments, the information includes MDT report and random-access report.

In some embodiments, the information includes SON report, MDT report, and random-access report.

In some embodiments, the information may include other information or report, which are not limited herein.

In some embodiments, when the first node 101 is the first network device 101-2, the foregoing third node 103 may be the same network device as the first network device 101-2.

For example, the first node 101 is the historical serving base station #1 of the terminal, and the third node 103 is also the historical serving base station #1.

In some embodiments, when the first node 101 is the first network device 101-2, the foregoing third node 103 may be a different network device from the first network device.

For example, the first node 101 is the historical serving base station #1 of the terminal, and the third node 103 is the historical serving base station #2, TCE, or other network devices different from the first node 101.

In some embodiments, at least two of the first node 101, the second node 102, and the third node 103 belong to different types of RAT.

For example, the first node 101 is the first network device 101-2, and the third node 103 is also the first network device. The first node 101 belongs to LTE, and the second node 102 belongs to NR. Alternatively, the first node 101 belongs to NR, and the second node 102 belongs to LTE.

For example, the first node 101 is a first network device 101-2, and the third node 103 is a different network device from the first network device. The first node 101 belongs to LTE, the second node 102 belongs to NR, and the third node 103 belongs to NR. Alternatively, the first node 101 belongs to NR, the second node 102 belongs to LTE, and the third node 103 belongs to NR.

In some embodiments, at least two of the first node 101, the second node 102, and the third node 103 belong to the same type of RAT.

For example, the first node 101 and the second node 102 belong to LTE, and the third node 103 belongs to NR.

For example, the first node 101 belongs to LTE, the second node 102 belongs to NR, and the third node 103 belongs to NR.

For example, the first node 101 belongs to NR, the second node 102 belongs to LTE, and the third node 103 belongs to NR.

For example, the first node 101, the second node 102, and the third node 103 belong to NR.

For example, the first node 101, the second node 102, and the third node 103 belong to LTE.

Other possible combinations are not exhaustively listed here.

In step S2102, the second node 102 fetches the information from the first node 101 based on the indication information.

In some embodiments, the indication information may be indicated by the same first node 101. For example, the indication information includes identity information of the terminal and availability indication information. The availability indication information and identity information of the terminal are sent to the second node 102 by the network device that the terminal has accessed when the terminal has information associated with the third node 103. The network device includes but not limited to the historical serving base station of the terminal.

In some embodiments, the indication information may be indicated by different first nodes 101. For example, the indication information includes identity information of the terminal and availability indication information. The identity information of the terminal is sent to the second node 102 by a network device that the terminal has accessed when the terminal has information associated with the third node 103. The network device includes but not limited to the historical serving base station of the terminal. The availability indication information is sent by the terminal to the second node.

In some embodiments, the second node 102 determines whether to fetch the information based on its own decision.

In some embodiments, the second node 102 fetches the information from the first node.

In some embodiments, the first node 101 is a first network device 101-2, and the second node may fetch the information from the terminal 101-1.

The information includes at least one of the following: the SON report; the MDT report.

The information includes random-access report.

The information may include one or more of the uplink reports, or other information.

For example, the first network device 101-2 is the historical serving base station of the terminal. The historical serving base station sends the indication information to the serving base station (i.e., the second node 102) of the terminal, informing the serving base station that the terminal has the information. The information is associated with the third node. For example, the information is associated with the historical serving base station or the TCE. The second node 102 may fetch the information from the terminal 101-1.

In some embodiments, the first node 101 is the first network device 101-2, and the second node may fetch the information from the first network device 101-2.

For example, the first network device 101-2 is a core network or OAM. The core network or OAM sends the indication information to the serving base station (i.e., the second node 102) of the terminal, informing the serving base station that the terminal has the information. The information is associated with the third node. For example, the information is associated with a historical serving base station or TCE. The second node 102 may fetch the information from the first network device 101-2.

In other words, as the current serving base station, the second node may fetch the information from the first node (such as a first network device, e.g., a historical serving base station), from the terminal, or may fetch part of the information from each of them, so as to forward the information to the network element that require the information.

In some embodiments, the first node 101 is a first network device 101-2, and the second node may fetch the information from the first network device 101-2 and the terminal 101-1.

For example, the first network device 101-2 is a core network or OAM. The core network or OAM sends the indication information to the serving base station (i.e., the second node 102) of the terminal, informing the serving base station that the terminal has the information. The information is associated with a third node. For example, the information is associated with a historical serving base station or TCE. The second node 102 may fetch the information from the first network device 101-2 and the terminal 101-1.

In some embodiments, the first node 101 is a terminal 101-1, and the second node may fetch the information from the terminal 101-1.

For example, the terminal 101-1 sends the indication information to the serving base station (i.e., second node 102) of the terminal, informing the serving base station that the terminal has the information. The information is associated with a third node. For example, the information is associated with a historical serving base station or TCE. the second node 102 may fetch the information from the terminal 101-1.

In some embodiments, the first node 101 is a terminal 101-1, and the second node may fetch the information from the first network device 101-2.

For example, the terminal 101-1 sends the indication information to the serving base station (i.e., second node 102) of the terminal, informing the serving base station that the terminal has the information. The information is associated with a third node. For example, the information is associated with a historical serving base station, TCE, and the like. The second node 102 may fetch the information from the historical serving base station of the terminal, OAM, and the like.

In some embodiments, the first node 101 is a terminal 101-1, and the second node may fetch the information from the first network device 101-2 and the terminal 101-1.

For example, the terminal 101-1 sends the indication information to the serving base station (i.e., second node 102) of the terminal, informing the serving base station that the terminal has the information. The information is associated with a third node. For example, the information is associated with the historical serving base station, TCE and the like. The second node 102 may fetch the information from the historical serving base station of the terminal, OAM, the terminal and the like.

The above is merely exemplary illustration, and any scheme in which the second node 102 fetches the information from a node possessing the information should fall within the protection scope of the present disclosure.

In some embodiments, the second node may fetch the information from the terminal 101-1 and/or from the first network device 101-2.

For example, the second node 102 fetches the SON report from the terminal 101-1.

For example, the second node 102 fetches the MDT report from the terminal 101-1.

For example, the second node 102 fetches a random-access report from the terminal 101-1.

For example, the second node 102 fetches two or three of the SON report, the MDT report, and the random-access report from the terminal 101-1.

For example, the second node 102 fetches one, two, or three of the SON report, the MDT report, and the random-access report from the first network device 101-2.

For example, the second node 102 fetches one or two of the SON report, MDT report, and random-access report from the terminal 101-1, and the second node fetches two or one of the SON report, MDT report, and random-access report from the first network device 101-2.

The above is merely exemplary illustration, and all solutions by which the second node 102 fetches the forgoing information should fall within the protection scope of the present disclosure.

In step S2103, the second node 102 sends the information to the third node 103.

In some embodiments, the third node 103 receives the information.

In some embodiments, the third node 103 uses the information to perform operations including mobility management, network optimization and the like.

In some embodiments, the first network device 101-2 sends indication information (including one or more of the foregoing indication information) to the second node 102. The second node 102 fetches the information (which may be fetched from the first network device 101-2 and/or the terminal 101-1) based on the indication information and then sends the information to the first node 101. The third node 103 is the same network device as the first node 101.

In some embodiments, as the first node 101, the first network device 101-2 sends the indication information to the second node 102. The second node 102 fetches the information from the first node 101 based on the indication information and then sends the information to the third node 103. The third node 103 and the first node 101 are different network devices.

In some embodiments, as the first node 101, the terminal 101-1 sends the indication information to the second node 102. The second node 102 fetches the information from the first node 101 based on the indication information and sends the information to the third node 103. The third node 103 may be the first network device that the terminal has accessed when it has the information or other network devices different from the first network device.

In some embodiments, the foregoing information includes, but is not limited to, one or more of the SON report, MDT report, and random-access report.

For example, when the information is a random-access report, which may be used by the first node 101 for the network optimization, the third node 103 may be the same network device as the first node 101.

The first node 101 may send indication information to the second node 102. The second node fetches, based on the indication information, the random-access report from the first node 101 and sends the random-access report to the first node 101.

For example, if a historical serving base station of a terminal expects to fetch a random-access report from the terminal, the historical serving base station may serve as the first node. The historical serving base station may send indication information to a second node that has an inter-network interface with the historical serving base station. The indication information may include one or more of the following: identity information of the terminal, availability indication information, and identity information of the third node. After receiving the indication information, the second node may fetch the random-access report from the terminal and/or from other historical serving base stations, and forward the random-access report to the historical serving base station, so that the historical serving base station can perform network optimization.

When the information is a MDT report, the MDT report is to be fetched by the second node based on the indication information of the first node (e.g., base station, core network, or OAM) and sent to the third node (e.g., TCE). Accordingly, the third node and the first node are different network devices.

For example, if the historical serving base station of the terminal, core network, or OAM knows that the terminal has the information, it may send the indication information to the serving base station (i.e., the second node) of the terminal. The indication information includes one or more of the following: identity information of the terminal, availability indication information, and identity information of the third node. The serving base station fetches, based on the indication information, the MDT report from one or more of the following nodes: the terminal, the historical serving base station of the terminal, core network, or OAM, and then sends the MDT report to the third node, such as the TCE.

For example, when the information is a SON report, which may be used by the first node 101 for network optimization or sent to the third node, the third node 103 and the first node 101 may be a same network device or different network devices.

For example, if the terminal, historical serving base station of the terminal, core network, or OAM knows that the terminal has the information, it may send the indication information to the serving base station (i.e., the second node) of the terminal. The indication information includes one or more of the following: identity information of the terminal, availability indication information, and identity information of the third node. The serving base station fetches, based on this indication information, a SON report from one or more of the following nodes: the terminal, historical serving base station of the terminal, core network, or OAM, and then sends the SON report to the third node. For example, the third node is the historical serving base station of the terminal, core network, OAM, TCE or the like.

The above is merely exemplary illustration. Any solutions in which the second node fetches the information and forwards it to the third node should fall within the protection scope of the present disclosure.

In some embodiments, the first node 101 (including but not limited to terminal 101-1, first network device 101-2, such as historical serving base station, core network or OAM), the second node 102 (serving base station of the terminal, network device having inter-network interface with the first network device 101-2), and the third node 103 (historical serving base station, core network, OAM, TCE or the like) may belong to different RATs.

For example, in a dual-connection scenario, a terminal simultaneously accesses both the MN and the SN. An inter-network interface exists between the MN and the SN. The SN may send indication information to the MN through the inter-network interface, which is used by the MN to request information reported by the terminal and forward the information reported by the terminal to the SN.

In a single-connection scenario, in the case that no inter-network interface exists between network devices, the second node, as a serving base station, fails to perceive the first node (e.g., the historical serving base station of the terminal), and therefore cannot forward the information of the terminal to the first node.

According to the solutions of some embodiments of the present disclosure, the second node may determine, based on received indication information, that the information is available at the terminal and the information is associated with the third node (the third node and the first node may be the same network device or different network devices). The second node may fetch the information from the terminal and/or the first network device and forward it to the third node (e.g., forward it to the historical serving base station of the terminal). It should be noted that a direct network interface may be absent between the second node and the third node, as long as the second node can forward the information to the third node through network interfaces with other nodes. For example, the second node may forward the information to a base station which has an inter-network interface with the second node. The inter-network interface exists between the base station and the third node, so the base station may forward the information to the third node.

For another example, the second node forwards the information to the core network, and then the core network forwards the information to the third node.

In the foregoing embodiments, at least two of the first node, second node, and third node may belong to different types of RAT. For example, the second node and the third node belong to different types of RAT, so that cross-RAT information transmission may be achieved through the above-described solution of the present disclosure.

In the foregoing embodiments, at least two of the first node, second node, and third node may belong to the same type of RAT. For example, the second node and the third node belong to the same type of RAT. Information transmission under the same RAT may be achieved through the above-mentioned solution of the present disclosure. In some embodiments, the names of the information and the like are not limited to the names recorded in the embodiments. Terms such as "information", "message", "signal", "signaling", "report", "configuration", "indication", "instruction", "command", "channel", "parameter", "domain", "field", "symbol", "symbol", "codebook", "codeword", "codepoint", "bit", "data", "program", and "chip" may be used interchangeably.

In some embodiments, the terms "uplink", "UL", and "physical uplink" may be used interchangeably.

In some embodiments, the terms "radio", "wireless", "radio access network (RAN)", "access network (AN)", and "RAN-based" may be used interchangeably.

In some embodiments, terms such as "send", "transmit", "report", "distribute", "transfer", "bidirectional transmission", "send and/or receive" may be used interchangeably.

In some embodiments, the terms "frame", "radio frame", "subframe", "slot", "sub-slot", "mini-slot", "symbol", "symbol", and "transmission time interval (TTI)" may be used interchangeably.

In some embodiments, "fetch", "acquire", "obtain", "receive", "transmit", "bidirectional transmission", and "send and/or receive" may be used interchangeably and may be interpreted as multiple meanings that include receiving from other entities, fetching from protocols, fetching from higher layers, obtaining through self-processing, or autonomous implementation or the like.

In some embodiments, terms such as "send", "transmit", "report", "distribute", "transfer", "bidirectional transmission", "send and/or receive" may be used interchangeably.

In some embodiments, terms such as "certain", "preset", "preconfigured", "set", "indicated", "a certain", "any", and "first" may be used interchangeably. "certain A", "preset A", "preconfigured A", "set A", "indicated A", "a certain A", "any A" and "first A" may be interpreted as "A" pre-defined in a protocol or the like, or as "A" fetched through setting, configuration, or indication, or as specific A, a certain A, any A, or first A, which are not limited here.

In some embodiments, the determination or judgment may be performed by a value represented by 1 bit (0 or 1), or by a true or false value (boolean), or by a comparison of numerical values (e.g., a comparison with a predetermined value), which is not limited here.

In some embodiments, the information transmission method involved in the embodiments of the present disclosure may include at least one of steps S2101 to S2103. For example, step S2101 may be implemented as an independent embodiment. Step S2102 may be implemented as an independent embodiment. Step S2103 may be implemented as an independent embodiment. Step S2101 and S2102 may be implemented as an independent embodiment. Step S2102 and S2103 may be implemented as an independent embodiment. Steps S2101 to S2103 may be implemented as an independent embodiment, which is not limited here.

In some embodiments, step S2102 is optional. One or more of the steps may be omitted or substituted in different embodiments.

In some embodiments, step S2103 is optional. One or more of the steps may be omitted or substituted in different embodiments.

In some embodiments, steps S2101 to S2103 are optional. One or more of the steps may be omitted or substituted in different embodiments.

In the foregoing embodiments, in the case that the network connection is absent between the third node and the terminal, the information of the terminal is forwarded to the third node, thereby improving the reliability and availability of single-connection communication. In particular, when the third node and the second node belong to different types of RAT, the reliability and availability of single-connection and cross-RAT communication are improved.

FIG. 3A is a flowchart of the information transmission method according to some embodiments of the present disclosure. As shown in FIG. 3A, the embodiments of the present disclosure relate to an information transmission method, which may be executed by a first node 101. Specifically, the first node 101 is the terminal 101-1, and the method includes: step S3101, sending the indication information.

In some embodiments, the terminal 101-1 sends indication information to the second node 102.

In some embodiments, the second node 102 receives the indication information.

In some embodiments, the second node 102 is the serving base station of the terminal. In other words, the serving base station of the terminal is the base station currently serving the terminal.

In some embodiments, optional implementations of step S3101 may be found in the optional implementations of step S2101 in FIG. 2A and other related parts in the embodiments involved in FIG. 2A, which are not repeated here.

In step S3102, the information is sent.

In some embodiments, the terminal 101-1 sends the information to the second node 102.

In some embodiments, the second node 102 receives the information.

In some embodiments, optional implementations of step S3102 may be found in the optional implementations of step S2102 in FIG. 2A and other related parts in the embodiments involved in FIG. 2A, which are not repeated here.

The communication method according to the embodiments of the present disclosure may include at least one of steps S3101 to S3102. For example, step S3101 may be implemented as an independent embodiment; step S3102 may be implemented as an independent embodiment; and steps S3101 to S3102 may be implemented as independent embodiments. The disclosure is not limited thereto.

In some embodiments, step S3102 is optional and may not be performed when the second node 102 fetches information from the first network device. In different embodiments, one or more of these steps may be omitted or substituted.

In some embodiments, step S3101 is optional and may not be performed when the first network device sends indication information to the second node 102.

In some embodiments, steps S3101 to S3102 are optional. When the first network device sends indication information to the second node 102 and the second node 102 fetches information from the first network device, steps S3101 to S3102 may not be executed. In different embodiments, one or more of these steps may be omitted or substituted.

In the foregoing embodiments, the terminal may send indication information to the second node, so that the second node determines that the information is available at the terminal, thereby determining whether to fetch the information, improving the reliability and availability of single-connection communication, and improving the reliability and availability of single-connection and cross-RAT communication.

FIG. 3B is a flowchart of the information transmission method according to some embodiments of the present disclosure. As shown in FIG. 3A, the embodiments of the present disclosure relate to an information transmission method, which may be executed by the first node 101. Specifically, the first node 101 is the first network device 101-2. The method includes: step S3201, sending the indication information.

In some embodiments, the first network device 101-2 sends indication information to the second node 102.

In some embodiments, the second node 102 receives the indication information.

In some embodiments, the second node 102 is the serving base station of the terminal.

In some embodiments, the first network device 101-2 is a network device that the terminal previously accessed when it had information.

For example, the first network device 101-2 is a historical serving base station of the terminal.

In some embodiments, optional implementations of step S3101 may be found in the optional implementations of step S2101 in FIG. 2A and other related parts in the embodiments involved in FIG. 2A, which are not repeated here.

In step S3202, the information is sent.

In some embodiments, the first network device 101-2 sends information of the terminal to the second node 102.

In some embodiments, the second node 102 receives information of the terminal.

In some embodiments, optional implementations of step S3102 may be found in the optional implementations of step S2102 in FIG. 2A and other related parts in the embodiments involved in FIG. 2A, which are not repeated here.

In step S3203, the information is fetched.

In some embodiments, the first network device 101-2 fetches information sent by the second node 102, but the disclosure is not limited thereto. The first network device 101-2 may also receive instruction signaling sent by other entities.

For example, the information in the present disclosure may be information stored in the terminal.

For example, the information in the present disclosure may be information associated with network devices and stored in the terminal.

For example, the information in the present disclosure may be information generated or fetched by a terminal that has previously accessed or attempted to access a network device.

For example, the information in the present disclosure may be information fetched by the terminal after performing operations such as measurement based on instructions issued by the network device.

For example, the information in the present disclosure includes, but is not limited to, one or more of the SON report, MDT report, and random-access report.

In some embodiments, the first network device 101-2 fetches information as defined by a protocol.

In some embodiments, the first network device 101-2 performs processing to obtain the information. In some embodiments, optional implementations of step S3203 may be found in the optional implementations of step S2103 in FIG. 2A, and other related parts in the embodiments involved in FIG. 2A, which are not repeated here.

The communication method involved in the embodiments of the present disclosure may include at least one of steps S3201 to S3203. For example, step S3201 may be implemented as an independent embodiment, step S3202 may be implemented as an independent embodiment, step S3203 may be implemented as an independent embodiment, step S3201 and step S3202 may be implemented as an independent embodiment, and step S3201 and step S3203 may be implemented as an independent embodiment. The disclosure is not limited thereto.

In some embodiments, step S3202 is optional and may not be performed when the second node 102 fetches the information from the terminal. In different embodiments, one or more of these steps may be omitted or substituted.

In some embodiments, step S3203 is optional; when the second node 102 fetches information and sends the information to a third node 103 which is different from the first network device, the step S3203 may not be performed. In different embodiments, one or more of these steps may be omitted or substituted.

In some embodiments, step S3201 is optional and may not be performed when the terminal 101-1 sends indication information to the second node 102.

In some embodiments, steps S3201 to S3202 are optional. When terminal 101-1 sends the indication information to the second node 102 which fetches the information of the terminal from the terminal, steps S3201 to S3202 may not be performed. In some embodiments, steps S3202 and S3203 may be performed selectively or both may be performed. Specifically, the first network device 101-2 sends the information of the terminal that the first network device 101-2 possesses to the second node 102, and fetches the latest information of the terminal sent by the second node 102 after synchronizing all the information of the terminal.

In some embodiments, steps S3201 to S3203 are optional. When the terminal 101-1 sends the indication information to the second node 102 which fetches the information of the terminal from the terminal, and the second node 102 forwards the information to the third node 103 which is different from the first network device 101-2, steps S3201 to S3202 may not be performed.

In the foregoing embodiments, the first network device may send indication information to the second node, so that the second node determines that the information is available at the terminal, thereby determining whether to fetch the information. Furthermore, the first network device may send information to the second node and/or fetch information from the second node, thereby improving the reliability and availability of single-connection communication, and improving the reliability and availability of single-connection and cross-RAT communication.

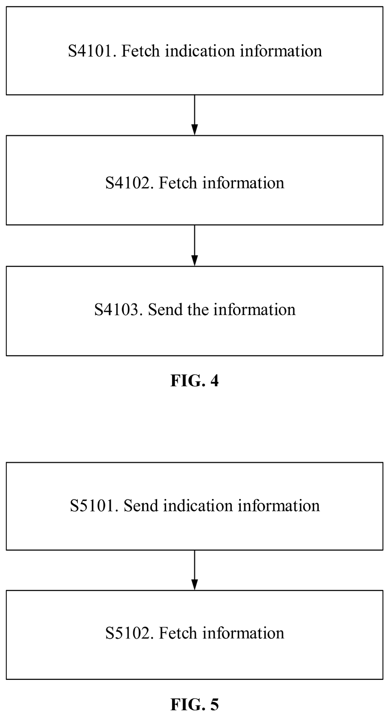

FIG. 4 is a flowchart of an information transmission method according to some embodiments of the present disclosure. As shown in FIG. 4, the embodiments relate to an information transmission method, which is performed by a second node 102. The information transmission method includes: step 4101, fetching the indication information.

In some embodiments, the second node 102 fetches indication information sent by the first node 101, but is not limited thereto; and the second node 102 may also receive indication information sent by other entities. The first node 101 includes, but is not limited to, the terminal 101-1 and/or the first network device 101-2.

In some embodiments, the second node 102 fetches indication information as defined by the protocol.

In some embodiments, the second node 102 perform autonomous processing to obtain the indication information.

In some embodiments, step S4101 is omitted. The second node 102 autonomously implements the function indicated by the indication information, or the above-mentioned function is preset or default.

In some embodiments, the indication information may be indicated by the same first node 101. For example, the indication information includes identity information of the terminal and availability indication information. The availability indication information and identity information of the terminal are sent to the second node 102 by a network device that the terminal has accessed when it has information associated with the third node 103, including but not limited to the historical serving base station of the terminal.

In some embodiments, the indication information may be indicated by different first nodes 101. For example, the indication information includes identity information of the terminal and availability indication information. The identity information of the terminal is sent to the second node 102 by a network device that the terminal has accessed when it has information associated with the third node 103, including but not limited to the historical serving base station of the terminal. The availability indication information is sent by the terminal to the second node.

In some embodiments, optional implementations of step S4101 may be found in the optional implementations of step S2101 in FIG. 2A and other related parts in the embodiments involved in FIG. 2A, which are not repeated here.

In step 4102, information is fetched.

In some embodiments, the second node 102 fetches information sent by the first node 101, but is not limited thereto. The second node 102 may also receive indication signaling sent by other entities. The first node 101 includes, but is not limited to, terminal 101-1 and/or first network device 101-2.

In some embodiments, the second node 102 fetches information as defined by the protocol.

In some embodiments, the second node 102 perform autonomous processing to fetch the information.

In some embodiments, optional implementations of step S4101 may be found in optional implementations of step S2102 in FIG. 2A and other related parts in the embodiments involved in FIG. 2A, which are not repeated here.

In step 4103, the information is sent.

In some embodiments, the second node 102 sends information to the third node 103.

In some embodiments, the third node 103 receives the information.

In some embodiments, the third node 103 and the first network device 101-1 are the same network device or different network devices.

The communication method involved in the embodiments of the present disclosure may include at least one of steps S4101 to S4103. For example, step S4101 may be implemented as an independent embodiment, step S4102 may be implemented as an independent embodiment, step S4103 may be implemented as an independent embodiment, step S4101 and step S4102 may be implemented as an independent embodiment, and step S4101 and step S4103 may be implemented as an independent embodiment. The disclosure is not limited thereto.

In some embodiments, step S4101 is optional. When the second node 102 assumes by default that available indication information is at the terminal, the step may be not performed. In different embodiments, one or more of the steps may be omitted or substituted.

In some embodiments, step S4102 is optional. When the second node 102 determines, based on its own strategy, that the information already exists or it is not to retrieve information of the terminal, the step may not be performed. In different embodiments, one or more of the steps may be omitted or substituted.

In some embodiments, step S4103 is optional. When the third node 103 does not expect to fetch the information or the second node 102 is not to send the information to the third node 103, the step may not be performed. In different embodiments, one or more of these steps may be omitted or substituted.

In some embodiments, steps S4102 to S4103 are optional. When the second node 102 determines, based on its own strategy, not to retrieve information of the terminal, steps S4102 to S4103 may not be performed. In different embodiments, one or more of these steps may be omitted or substituted.

In some embodiments, steps S4101 to S4103 are optional, and one or more of these steps may be omitted or substituted in different embodiments.

In the foregoing embodiments, the second node may fetch indication information, determine whether to fetch information, and send the information to the third node, thereby improving the reliability and availability of single-connection communication, and also improving the reliability and availability of single-connection and cross-RAT communication.

FIG. 5 is a flowchart of an information transmission method according to some embodiments of the present disclosure. As shown in FIG. 5, the embodiments of the disclosure relate to an information transmission method, which is performed by a third node 103. The information transmission method includes: step S5101, sending the indication information.

In some embodiments, when the third node 103 and the first network device 101-1 are the same network device, the third node 103 may send indication information to the second node 102.

In some embodiments, optional implementations of step S5101 may be found in the optional implementations of step S2101 in FIG. 2A and other related parts in the embodiments involved in FIG. 2A, which are not repeated here.

In step S5102, information is fetched.

In some embodiments, the third node 103 fetches information sent by the second node 102, but is not limited thereto; the third node 103 may also receive instruction signaling sent by other entities.

In some embodiments, the third node 103 fetches information as defined by the protocol.

In some embodiments, the third node 103 performs processing to obtain the information.

In some embodiments, optional implementations of step S5102 may be found in optional implementations of step S2103 in FIG. 2A and other related parts in the embodiments involved in FIG. 2A, which are not repeated here.

The communication method involved in some embodiments of the present disclosure may include at least one of steps S5101 to S5102. For example, step S5101 may be implemented as an independent embodiment, step S5102 may be implemented as an independent embodiment, and step S5101 and step S5102 may be implemented as an independent embodiment. The disclosure is not limited thereto.

In some embodiments, step S5102 is optional and may not be performed when the third node 103 does not expect to fetch the information. In different embodiments, one or more of these steps may be omitted or substituted.

In some embodiments, step S5101 is optional and may not be performed when the third node 103 and the first network device 101-2 are different network devices or when the second node 102 receives indication information from the terminal 101-1. In different embodiments, one or more of these steps may be omitted or substituted.

In some embodiments, steps S5101 to S5102 are optional. When the third node 103 and the first network device 101-2 are different network devices, or when the second node 102 receives indication information from the terminal 101-1 and the third node 103 does not expect to fetch the information, steps S5101 to S5102 may not be performed. In different embodiments, one or more of these steps may be omitted or substituted.

In the foregoing embodiments, the third node may fetch information from the second node, thereby improving the reliability and availability of single-connection communication, and also improving the reliability and availability of single-connection and cross-RAT communication.

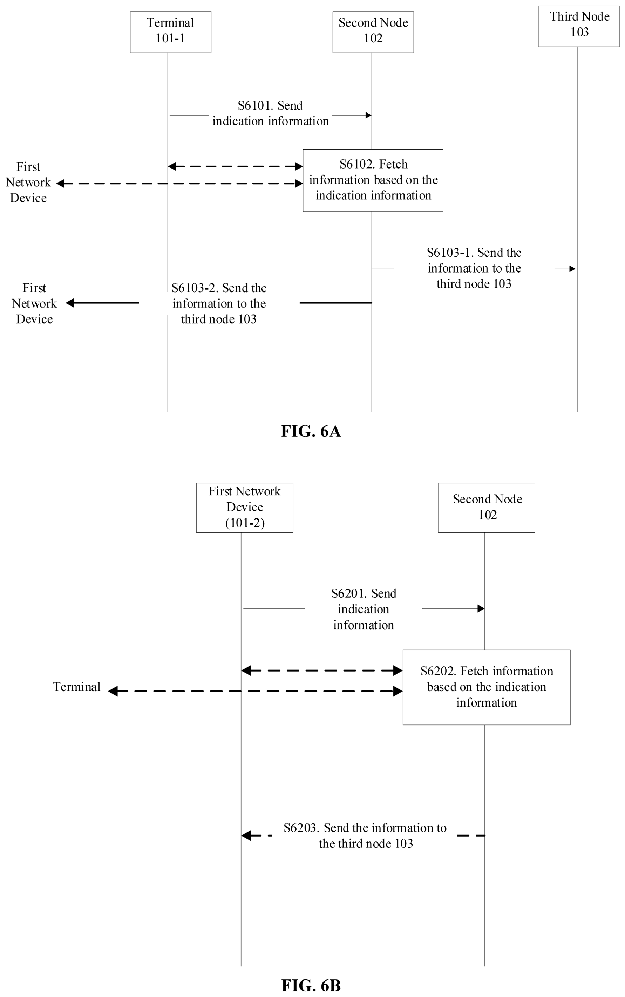

FIG. 6A is a flowchart of an information transmission method according to some embodiments of the present disclosure. As shown in FIG. 6A, the embodiments of the present disclosure relate to an information transmission method, which includes the followings.

In step 6101, the terminal 101-1 sends the indication information to the second node 102.

In some embodiments, optional implementations of step S6101 may be found in the optional implementations of step S2101 in FIG. 2A and other related parts in the embodiments involved in FIG. 2A, which are not repeated here.

In step 6102, the second node 102 fetches information based on the indication information.

In some embodiments, the second node 102 may fetch the information from the terminal 101-1 and/or the first network device 101-2.

In some embodiments, optional implementations of step S6102 may be found in the optional implementations of step S2102 in FIG. 2A and other related parts in the embodiments involved in FIG. 2A, which are not repeated here.

In step 6103, the second node 102 sends information to the third node 103.

In some embodiments, the third node 103 and the first network device 101-2 may be different network devices, and step S6103-1 is performed.

In some embodiments, the third node 103 and the first network device 101-2 may be the same network device, in which case step S6103-2 is performed.

Steps S6103-1 and S6103-2 may be performed individually or both, which is not limited in the present disclosure.

In some embodiments, at least two of the first node 101, the second node 102, and the third node 103 may belong to different types of RAT. Cross-RAT information transmission can be achieved according to the solutions of the present disclosure.

In some embodiments, at least two of the first node 101, the second node 102, and the third node 103 may belong to the same type of RAT. Information transmission within the same RAT can be achieved according to the solutions of the present disclosure enables.

In some embodiments, optional implementations of step S6103 may be found in the optional implementations of step S2103 in FIG. 2A and other related parts in the embodiments involved in FIG. 2A, which are not repeated here.

In the foregoing embodiments, in the absence of the network connection between the third node and the terminal, the information of the terminal is forwarded to the third node, thereby improving the reliability and availability of single-connection communication. In particular, when the third node and the second node belong to different types of RAT, the reliability and availability of single-connection and cross-RAT communication are improved, and the reliability and availability of single-connection and cross-RAT communication may also be improved.

FIG. 6B is a flowchart of an information transmission method according to some embodiments of the present disclosure. As shown in FIG. 6B, the embodiments of the present disclosure relate to an information transmission method, which includes the followings.

In step 6201, the first network device 101-2 sends the indication information to the second node 102.

In some embodiments, optional implementations of step S6201 may be found in the optional implementations of step S2101 in FIG. 2A and other related parts in the embodiments involved in FIG. 2A, which are not repeated here.

In step 6202, the second node 102 fetches information based on the indication information.

In some embodiments, the second node 102 may fetch the information from the terminal 101-1 and/or the first network device 101-2.

In some embodiments, optional implementations of step S6102 may be found in the optional implementations of step S2102 in FIG. 2A and other related parts in the embodiments involved in FIG. 2A, which are not repeated here.

In step 6203, the second node 102 sends information to the first network device 101-2.

In some embodiments, the third node 103 and the first network device 101-2 are the same network device.

In some embodiments, optional implementations of step S6203 may be found in the optional implementations of step S2103 in FIG. 2A and other related parts in the embodiments involved in FIG. 2A, which are not repeated here.

In some embodiments, at least two of the first node 101, the second node 102, and the third node 103 may belong to different types of RAT. Cross-RAT information transmission can be achieved according to the solutions of the present disclosure.

In some embodiments, at least two of the first node 101, the second node 102, and the third node 103 may belong to the same type of RAT. Information transmission within the same RAT can be achieved according to the solutions of the present disclosure.

In the foregoing embodiments, in the absence of the network connection between the third node and the terminal, the information of the terminal is forwarded to the third node, thereby improving the reliability and availability of single-connection communication. In particular, when the third node and the second node belong to different types of RAT, the reliability and availability of single-connection and cross-RAT communication are improved, and the reliability and availability of single-connection and cross-RAT communication may also be improved.

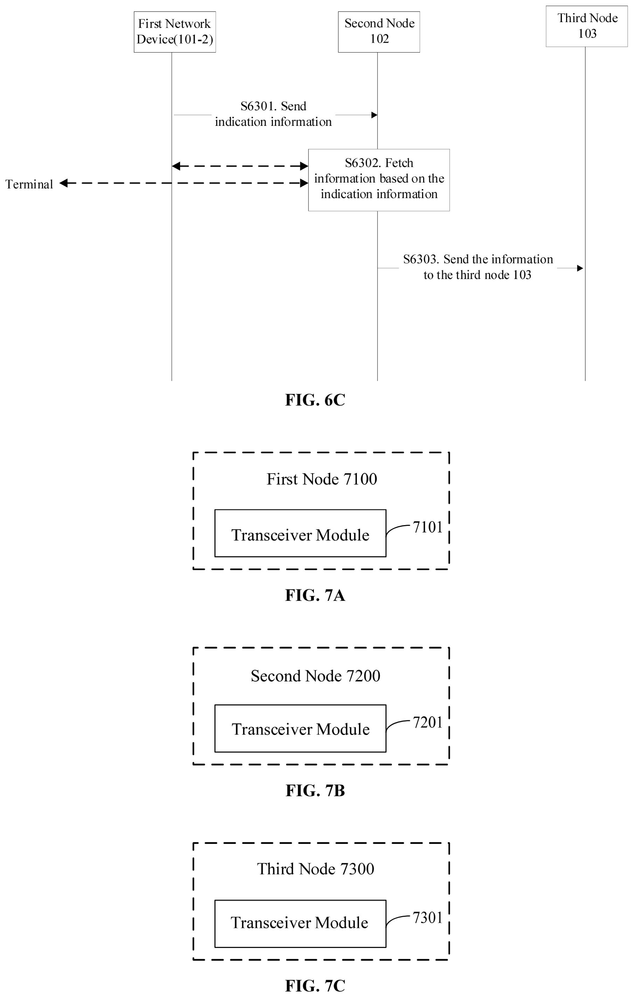

FIG. 6C is a flowchart of an information transmission method according to some embodiments of the present disclosure. As shown in FIG. 6C, the present disclosure relates to an information transmission method, which includes the followings.

In step 6301, the first network device 101-2 sends indication information to the second node 102.

In some embodiments, optional implementations of step S6201 may be found in the optional implementations of step S2101 in FIG. 2A and other related parts in the embodiments involved in FIG. 2A, which are not repeated here.

In step 6302, the second node 102 fetches information based on the indication information.

In some embodiments, the second node 102 may fetch the information from the terminal 101-1 and/or the first network device 101-2.

In some embodiments, optional implementations of step S6102 may be found in the optional implementations of step S2102 in FIG. 2A and other related parts in the embodiments involved in FIG. 2A, which are not repeated here.

In step 6303, the second node 102 sends information to the third node 103.

In some embodiments, the third node 103 and the first network device 101-2 are different network devices.

In some embodiments, optional implementations of step S6303 may be found in the optional implementations of step S2103 in FIG. 2A and other related parts in the embodiments involved in FIG. 2A, which are not repeated here.

In some embodiments, at least two of the first node 101, the second node 102, and the third node 103 may belong to different types of RATs. Cross-RAT information transmission can be achieved according to the solutions of the present disclosure.

In some embodiments, at least two of the first node 101, the second node 102, and the third node 103 may belong to the same type of RAT. Information transmission within the same RAT can be achieved according to the solutions of the present disclosure.

In the foregoing embodiments, in the absence of the network connection between the third node and the terminal, the information of the terminal is forwarded to the third node, thereby improving the reliability and availability of single-connection communication. In particular, when the third node and the second node belong to different types of RAT, the reliability and availability of single-connection and cross-RAT communication are improved, and the reliability and availability of single-connection and cross-RAT communication may also be improved.

The aforementioned solutions of the present disclosure are further exemplified as follows.

For example, the above-mentioned beneficial effects may be achieved through network devices or terminals in the embodiments of the present disclosure.

Specifically, as for the network device side (which may be understood as the first network device 101-2, the second node 102, and/or the third node 103), the first network device 101-2 may send indication information to the second node 102 (this step may also be omitted when the terminal 101-1 sends indication information to the second node 102). The indication information is used by the second node for fetching information stored in the terminal and related to the third node 103. Furthermore, the second node 102 may fetch the information based on the indication information and forward it to the third node 103.

The first network device 101-2 may be a historical serving base station of terminal, core network, OAM, TCE, or the like.

The second node 102 includes one or more network nodes that have the inter-network interface (e.g., the Xn interface) with the first node, and/or, the second node 102 may include the serving base station of terminal 101-1.

The indication information includes one or more of the followings:
identity information of the terminal, indicating that the terminal has accessed the first network device 101-2;
the availability indication information of the information, indicating that the information is available at the terminal;
the identity information of the third node, used for forwarding of the information to the third node 103 by the second node 102.

The identity information of the third node includes, but is not limited to, one or more node identities or cell identities.

The third node 103 and the first network device 101-2 may be the same network device or different network devices. The foregoing description can be referred to for specific details, which are not repeated here.

As for the terminal side (which may be understood as terminal 101-1), the terminal sends the indication information to the second node 102 (this step may also be omitted when the first network device 101-2 sends the indication information to the second node 102). The indication information is used by the second node 102 for fetching information of the terminal associated with the third node 103. The second node 102 receives the indication information, determines, based on the indication information, that the terminal stores the information, and has an inter-network interface with the third node. The second node 102 fetches the information from the terminal side and forwards it to the third node 103.

The indication information includes one or more of the followings:
identity information of the terminal, indicating that the terminal has accessed the first network device 101-2;
the availability indication information of the information, indicating that the information is available at the terminal;
the identity information of the third node, used for forwarding of the information to the third node 103 by the second node 102.

The identity information of the third node includes, but is not limited to, one or more node identities or cell identities.

The third node 103 and the first network device 101-2 may be the same network device or different network devices. The foregoing description can be referred to for specific details, which are not repeated here.

The foregoing information transmission solutions include the followings.
(1) A first node 101 (which may be a terminal 101-1 or a first network device 101-2 (e.g., the historical serving base station of the terminal, core network, OAM, TCE, or the like)) sends indication information to a second node 102 (e.g., the current serving base station of the terminal or the network device having an inter-network interface with the first network device 101-2). The indication information is used by the second node 102 for fetching information of the terminal 101-1. The information is associated with a third node 103 (which may be the first network device 101-2 (e.g., the historical serving base station of the terminal, core network, OAM, TCE, and the like) or may be a TCE, or the like).
(2) Further optionally, the second node 102 forwards the information of the terminal side to the third node 103. The third node 103 and the first network device 101-2 may be a same network device as or different network devices.

For example, the third node 103 and the first network device 101-2 are the same network device, and the third node 103 is the historical serving base station of the terminal.

For example, the third node 103 and the first network device 101-2 are different network devices. The third node 103 may be a TCE, and the first network device 101-2 may be the historical serving base station of the terminal, core network, or OAM.

(3) Further, based on (1), the first node 101 may be at least one of the following:
(3a) the first network device 101-2;
(3b) the terminal 101-1.

The first network device 101-2 may include network devices that the terminal accessed when it has the information, such as the historical serving base station of the terminal, core network, OAM, TCE, and the like.

(4) Based on (3a), the second node 102 includes one or more second network devices that have an inter-network interface (e.g., an Xn interface) with the first node 101.

The second node 102 may have a direct or indirect inter-network interface with the first node 101, which is not limited in the present disclosure.
(5) Based on (3a), the indication information includes one or more of the followings:
   identity information of the terminal, indicating that the terminal has accessed the third node 103;
   availability indication information of the information, indicating that the information is available at the terminal;
   identity information of the third node.
(6) Based on (3b), the indication information includes at least one of the followings:
   the identity information of the terminal;
   the availability indication information of the information, indicating that the information is available at the terminal;
   the identity information of the third node, used for forwarding of the information of the terminal to the third node 103 by the second node 102, including but not limited to one or more node identities or cell identities.
(7) Based on (2), the second node 102 forwards the information of the terminal 101-1 to the third node 103, which includes the followings.

The terminal 101-1 reports the identity information of the third node together with the information to the second node 102, so that the second node 102 forwards the information to the third node 103.
(8) Based on (7), the identity information of the third node includes, but is not limited to, one or more node identities or cell identities. The identity information of the third node is used for forwarding of information of the terminal to the third node by the second node.
(9) Based on (1), the information includes, but is not limited to, SON reports and MDT reports (e.g., random-access reports).
(10) Based on above, the first node 101, the third node 103, and the second node 102 may belong to different RATs or to the same RAT, which are not limited in the present disclosure.

In some embodiments, the first node 101 is the terminal 101-1. The terminal 101-1 sends indication information (including one or more of the above-mentioned indication information) to the second node 102. The second node 102 may be the serving base station of terminal 101-1. After fetching the information of the terminal from terminal 101-1 and/or the first network device 101-2 based on the indication information, the second node 102 forwards the information of the terminal to the third node 103. For example, the third node 103 is the historical serving base station of the terminal. The third node 103 and the first network device 101-2 are the same network device.

In some embodiments, the first node 101 is the terminal 101-1. The terminal 101-1 sends indication information (including one or more of the above-mentioned indication information) to the second node 102. The second node 102 may be the serving base station of the terminal 101-1. After fetching the information of the terminal from the terminal 101-1 and/or the first network device 101-2 based on the indication information, the second node 102 forwards the information of the terminal to the third node 103. For example, the third node 103 is TCE. The third node 103 and the first network device 101-2 are different network devices.

In some embodiments, the first node 101 is the first network device 101-2, such as a historical serving base station of the terminal. The first network device 101-2 sends indication information (including one or more of the above-mentioned indication information) to the second node 102. The second node 102 may be a network device that has an inter-network interface with the first network device 101-2. After fetching the information of the terminal from the terminal 101-1 based on the indication information, the second node 102 forwards the information of the terminal to the first network device 101-2. The third node 103 is the same network device as the first network device 101-2.

In some embodiments, the first node 101 is the first network device 101-2, such as a core network or OAM. The first network device 101-2 sends indication information (including one or more of the above-mentioned indication information) to the second node 102. The second node 102 may be a network device that has an inter-network interface with the first network device 101-2. After fetching the information of the terminal from the terminal 101-1 and/or the first network device 101-2 based on the indication information, the second node 102 forwards the information of the terminal to the third node 103. For example, the third node 103 is TCE. The third node 103 and the first network device 101-2 are different network devices.

Some embodiments of the present disclosure also provide an apparatus for implementing any of the above-mentioned methods. For example, the present disclosure provides an apparatus that includes units or modules for implementing the steps performed by the terminal in any of the above-mentioned methods. For instance, the present disclosure further provides another apparatus that includes units or modules for implementing the steps performed by the network device (e.g., an access network device) in any of the above-mentioned methods.

It should be understood that the division of the units or the modules in the above-mentioned apparatus is only a logical functional division. In actual implementation, they may be fully or partially integrated into a single physical entity, or they may be physically separated. In addition, the units or modules in the apparatus may be implemented by a processor calling software. For example, the apparatus includes a processor, which is connected to a memory containing instructions. The processor calls the instructions stored in the memory to implement any of the above-mentioned methods or to implement the functions of the units or modules in the above-mentioned apparatus. For example, the processor may be a general-purpose processor, such as a central processing unit (CPU) or a microprocessor. The memory may be internal or external to the apparatus. Optionally, the units or modules in the apparatus may be implemented in the form of hardware circuits. The functions of some or all of the units or modules may be achieved through the design of these hardware circuits, which may be understood as one or more processors. For example, in one implementation, the hardware circuit is an application-specific integrated circuit (ASIC), and the functions of some or all of the units or modules are achieved through the design of the logical relationships between the components within the circuit. For instance, in another implementation, the hardware circuit may be implemented through a programmable logic device (PLD), such as a field-programmable gate array (FPGA). The FPGA may include a large number of logic gates. The connection relationships between the logic gates are configured through configuration files, thereby achieving the functions of some or all of the units or modules. All units or modules of the above-mentioned apparatus may be implemented entirely through processor-called software, or entirely through hardware circuits, or partially through processor-called software with the remaining parts implemented through hardware circuits.

In some embodiments, the processor is a circuit with signal processing capabilities. In one implementation, the processor may be a circuit with instruction reading and executing capabilities, such as a central processing unit (CPU), a microprocessor, a graphics processing unit (GPU, which may be understood as a microprocessor), or a digital signal processor (DSP). In another implementation, the processor may implement certain functions through the logical relationships of hardware circuits. The logical relationships of the aforementioned hardware circuits are fixed or reconfigurable. For example, the processor is a hardware circuit implemented by an application-specific integrated circuit (ASIC) or a programmable logic device (PLD), such as an FPGA. In a reconfigurable hardware circuit, the process of the processor loading a configuration document and configuring the hardware circuit may be understood as the process of the processor loading instructions to implement the functions of some or all of the above-mentioned units or modules. In addition, the processor may also be a hardware circuit designed for artificial intelligence, which may be understood as an ASIC, such as a neural network processing unit (NPU), a tensor processing unit (TPU), or a deep learning processing unit (DPU).

FIG. 7A is a block diagram of the first node according to an embodiment of the present disclosure. As shown in FIG. 7A, the first node 7100 may include: a transceiver module 7101.

In some embodiments, the transceiver module 7101 is configured to send indication information to a second node. The indication information is used for fetching of information of the terminal by the second node, where the information includes information associated with a third node.

Optionally, the transceiver module 7101 is configured to perform at least one of the communication steps (such as step S2101, step S2103, but not limited thereto) performed by the first node 101 in any of the above-mentioned methods, which are not elaborated here.

FIG. 7B is a block diagram of the second node according to an embodiment of the present disclosure. As shown in FIG. 7B, the second node 7200 may include a transceiver module 7201.

In some embodiments, the transceiver module 7201 is configured to receive indication information. The indication information is used for fetching of information of the terminal by the second node, where the information includes information associated with the third node.

Optionally, the transceiver module 7201 is configured to perform at least one of the communication steps (such as step S2101, step S2102, step S2103, but not limited thereto) that may be performed by the second node 7200 in any of the above-mentioned methods, which is not elaborated here.

FIG. 7C is a block diagram of the third node according to an embodiment of the present disclosure. As shown in FIG. 7C, the third node 7300 may include: a transceiver module 7301.

In some embodiments, the transceiver module 7301 is configured to receive information of the terminal sent by a second node. The second node fetches the information based on indication information. The information includes information associated with the third node.

Optionally, the transceiver module 7301 is configured to perform at least one of the communication steps (such as step S2101, step S2103, but not limited thereto) that may be performed by the third node 7300 in any of the above-mentioned methods, which are not elaborated here.

In some embodiments, the transceiver module may include a transmitting module and/or a receiving module. The transmitting module and the receiving module may be separate or integrated. Optionally, the transceiver module may be interchangeable with a transceiver.

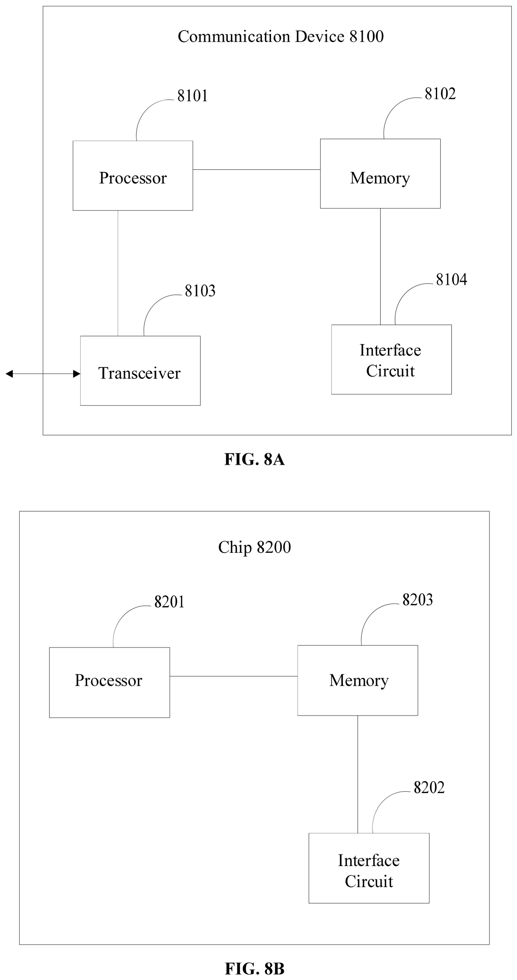

FIG. 8A is a block diagram of the communication device 8100 according to an embodiment of the present disclosure. The communication device 8100 may be a network device (e.g., an access network device); a terminal (e.g., a user equipment); or a chip, chip system, or processor that supports the core network device in implementing any of the above-mentioned methods. The communication device 8100 may also be a chip, chip system, or processor that supports the terminal in implementing any of the above-mentioned methods. The communication device 8100 may be configured to implement the methods described in the above-mentioned method embodiments. For details, reference can be made to the description in the above-mentioned method embodiments.

As shown in FIG. 8A, the communication device 8100 includes one or more processors 8101. The processor 8101 may be a general-purpose processor or a dedicated processor, such as a baseband processor or a central processing unit (CPU). The baseband processor may be used for processing communication protocols and communication data, while the CPU may be used for controlling communication apparatus (e.g., base stations, baseband chips, terminal devices, terminal device chips, DUs or CUs, and the like), executing programs, and processing program data. The communication device 8100 is used for executing any of the above-mentioned methods.

In some embodiments, the communication device 8100 further includes one or more memories 8102 for storing instructions. Optionally, all or part of the memories 8102 may also be located outside the communication device 8100.

In some embodiments, the communication device 8100 further includes one or more transceivers 8103. When the communication device 8100 includes one or more transceivers 8103, the transceivers 8103 perform at least one of the communication steps such as sending and/or receiving in the above-mentioned method (e.g., steps S2101, S2102, and S2103, but not limited thereto), and the processor 8101 performs at least one of the other steps.

In some embodiments, the transceiver may include a receiver and/or a transmitter. The receiver and the transmitter may be separate or integrated. Optionally, the terms transceiver, transceiver unit, transceiver machine, transceiver circuit, and the like, may be used interchangeably; the terms transmitter, transmitting unit, transmitter machine, transmitting circuit, and the like, may be used interchangeably; and the terms receiver, receiving unit, receiver machine, receiving circuit, and the like, may be used interchangeably.

In some embodiments, the communication device 8100 may include one or more interface circuits 8104. Optionally, the interface circuit 8104 is connected to the memory 8102, and the interface circuit 8104 may be configured to receive signals from the memory 8102 or other devices, and may be configured to send signals to the memory 8102 or other devices. For example, the interface circuit 8104 may read instructions stored in the memory 8102 and send the instructions to the processor 8101.

The communication device 8100 described in the foregoing embodiments may be a network device or a terminal, but the scope of the communication device 8100 described in the present disclosure is not limited thereto. The structure of the communication device 8100 may not be limited by FIG. 8A. The communication device may be an independent device or may be part of a larger device. For example, the communication device may be: (1) an independent integrated circuit IC, or a chip, or a chip system or a sub-system of the chip; (2) a collection of one or more ICs, optionally, where the IC collection may also include storage components for storing data and programs; (3) an ASIC, such as a modem; (4) a module that may be embedded in other devices; (5) a receiver, terminal device, smart terminal device, cellular phone, wireless device, handheld device, mobile unit, vehicle-mounted device, network device, cloud device, artificial intelligence device, and the like; (6) others.

FIG. 8B is a block diagram of chip 8200 according to an embodiment of the present disclosure. For cases where the communication device 8200 may be a chip or a chip system, the schematic diagram of the chip 8200 shown in FIG. 8B may be referenced, but is not limited thereto.

The chip 8200 includes one or more processors 8201. The chip 8200 are used for performing any of the above-mentioned methods.

In some embodiments, the chip 8200 further includes one or more interface circuits 8202. Optionally, the interface circuit 8202 is connected to the memory 8203. The interface circuit 8202 may be used for receiving signals from the memory 8203 or other devices, and the interface circuit 8202 may be used for sending signals to memory 8203 or other devices. For example, the interface circuit 8202 may read instructions stored in memory 8203 and send the instructions to the processor 8201.

In some embodiments, the interface circuit 8202 performs at least one of the communication steps that include sending and/or receiving in the above-mentioned method (e.g., steps S2101, S2102, and S2103, nut not limited thereto). The processor 8201 performs at least one of the other steps.

In some embodiments, the terms interface circuit, interface, transceiver pin, transceiver, and the like, may be used interchangeably.

In some embodiments, the chip 8200 further includes one or more memories 8203 for storing instructions. Optionally, all or part of the memories 8203 may be located outside of chip 8200.

The present disclosure also provides a storage medium storing instructions, where the instructions, upon being executed on the communication device, cause the communication device to implement the information transmission method according to any one of the foregoing embodiments. Optionally, the storage medium is an electronic storage medium. Optionally, the storage medium is a computer-readable storage medium, but is not limited thereto. The storage medium may also be a storage medium readable by other devices. Optionally, the storage medium may be a non-transitory storage medium, but is not limited thereto. The storage medium may also be a transitory storage medium.

The present disclosure also provides a program product that, when executed by the communication device 8100, causes the communication device 8100 to perform any of the above-mentioned methods. Optionally, the program product is a computer program product.

The present disclosure also proposes a computer program that, when run on a computer, causes the computer to perform any of the above-mentioned methods.

Other embodiments of the present disclosure will readily occur to those skilled in the art upon consideration of the specification and practice of the invention disclosed herein. The present disclosure is intended to cover any variations, uses, or adaptations of the present disclosure that follow the general principles of the present disclosure and include common knowledge or customary techniques in the art not disclosed herein. The specification and examples are to be considered exemplary only, and the true scope and spirit of the present disclosure are indicated by the following claims.

It should be understood that the present disclosure is not limited to the precise structures described above and shown in the accompanying drawings, and various modifications and changes may be made without departing from the scope of the present disclosure. The scope of the present disclosure is limited only by the appended claims.

## Claims

1. An information transmission method, being applied to a first node, and comprising:
sending indication information to a second node, wherein the indication information is used for fetching, by the second node, of information of a terminal, and the information comprises information associated with a third node.

2. The method according to claim 1, wherein the indication information comprises at least one of the followings:
identity information of the terminal;
availability indication information, wherein the availability indication information indicates that the information is available at the terminal;
identity information of the third node.

3. The method according to claim 1 or 2, wherein the first node is selected from at least one of the followings:
the terminal;
a first network device.

4. The method according to claim 3, wherein the first node is the first network device, and the second node is selected from one or more second network devices having an inter-network interface with the first network device.

5. The method according to any one of claims 1 to 4, wherein the information comprises at least one of the followings:
a self-organizing network SON report;
a minimization drive test MDT report.

6. The method according to any one of claims 1 to 5, wherein the information comprises a random-access report.

7. The method according to any one of claims 3 to 6, wherein the first node is the first network device; the third node and the first node are either a same network device or different network devices.

8. The method according to any one of claims 3 to 7, wherein at least two of the first node, the second node, and the third node belong to different types of radio access technology RAT.

9. An information transmission method, being applied to a second node, and comprising:
receiving indication information, wherein the indication information is used for fetching, by the second node, of information of a terminal, and the information comprises information associated with a third node.

10. The method according to claim 9, wherein the indication information comprises at least one of the followings:
identity information of the terminal;
availability indication information, wherein the availability indication information indicates that the information is available at the terminal;
identity information of the third node.

11. The method according to claim 9 or 10, further comprising:
fetching, based on the indication information, the information from a first node.

12. The method according to any one of claims 9 to 11, wherein the first node is selected from at least one of the followings:
the terminal;
a first network device.

13. The method according to claim 12, wherein when the first node is the first network device, the second node is selected from one or more second network devices having an inter-network interface with the first network device.

14. The method according to any one of claims 11 to 13, further comprising:
sending the information to the third node.

15. The method according to any one of claims 9 to 14, wherein the information comprises at least one of the followings:
a self-organizing network SON report;
a minimization drive test MDT report.

16. The method according to any one of claims 9 to 15, wherein the information comprises a random-access report.

17. The method according to any one of claims 12 to 16, wherein the first node is the first network device; the third node and the first node are either a same network device or different network devices.

18. The method according to any one of claims 12 to 16, wherein at least two of the first node, the second node, and the third node belong to different types of radio access technology RAT.

19. An information transmission method, being applied to a third node, and comprising:
receiving information of a terminal sent by a second node, wherein the second node fetches the information based on indication information, and the information comprises information associated with the third node.

20. The method according to claim 19, wherein the indication information comprises at least one of the followings: identity information of the terminal; availability indication information, wherein the availability indication information indicates that the information is available at the terminal; identity information of the third node.

21. The method according to claim 19 or 20, further comprising:
sending the indication information to the second node.

22. The method according to any one of claims 19 to 21, wherein the information comprises at least one of the followings:
a self-organizing network SON report;
a minimization drive test MDT report.

23. The method according to any one of claims 19 to 22, wherein the information comprises a random-access report.

24. The method according to any one of claims 19 to 23, wherein the second node and the third node belong to different types of radio access technology RAT.

25. A first node, comprising:
a transceiver module, configured to send indication information to a second node, wherein the indication information is used for fetching, by the second node, of information of a terminal, and the information comprises information associated with a third node.

26. A second node, comprising:
a transceiver module, configured to receive indication information, wherein the indication information is used for fetching, by the second node, of information of a terminal, and the information comprises information associated with a third node.

27. A third node, comprising:
receiving information of a terminal sent by a second node, wherein the information is fetched by the second node based on indication information, and the information comprises information associated with a third node.

28. A first node, comprising:
one or more processors;
wherein the terminal is configured to perform the information transmission method according to any one of claims 1 to 8.

29. A second node, comprising:
one or more processors;
wherein a network device is configured to perform the information transmission method according to any one of claims 9 to 18.

30. A third node, comprising:
one or more processors;
wherein a network device is configured to perform the information transmission method according to any one of claims 19 to 24.

31. A communication system, comprising a first node, a second node, and a third node, wherein the first node is configured to implement the information transmission method according to any one of claims 1 to 8, the second node is configured to implement the information transmission method according to any one of claims 9 to 18, and the third node is configured to implement the information transmission method according to any one of claims 19 to 24.

32. A storage medium storing an instruction, wherein the instruction, upon being executed on a communication device, causes the communication device to implement the information transmission method according to any one of claims 1 to 8, claims 9 to 18, or claims 19 to 24.
